# EUROPÄISCHE PATENTSCHRIFT

(11) **EP 0 876 643 B1**
(45) Veröffentlichungstag und Bekanntmachung des Hinweises auf die Patenterteilung: **12.07.2000**
(21) Anmeldenummer: 97907009.1
(22) Anmeldetag: 21.01.1997
(51) Int. Cl.: G05D 23/13, E03C 1/04

(54) **WASSERENTNAHMESYSTEM**
WATER DRAW-OFF SYSTEM
SYSTEME DE PRISE D'EAU

(30) Priorität: 24.01.1996 DE 19602377
(43) Veröffentlichungstag der Anmeldung: 11.11.1998
(73) Patentinhaber: Hage Fittings Gmbh & Co. Kg, 63110 Rodgau (DE)
(72) Erfinder: SPIEGEL, Herbert, D-97464 Niederwerrn (DE); BÖHM, Robert, D-97453 Schonungen (DE)
(74) Vertreter: Rehmann, Klaus-Thorsten, Dipl.-Ing.
(86) Internationale Anmeldenummer: DE9700106
(87) Internationale Veröffentlichungsnummer: WO9727524

(56) Entgegenhaltungen:
- EP-A- 0 297 544
- EP-A- 0 387 396
- WO-A-89/09956
- DE-A- 3 426 890
- US-A- 2 654 580
- US-A- 4 421 269

## Beschreibung

Die Erfindung betrifft eine Mischeinrichtung für ein System zur Entnahme von Brauchwasser aus Zapfstellen wie Waschbecken oder dergleichen, wo kaltes, heißes oder warmes Wasser zur Verfügung stehen soll.

An der Zapfstelle wird über eine Armatur, die in modernen Häusern vielfach als Einhebel-Mischarmatur ausgebildet ist, über eine Dreh-/Schwenkbewegung des Hebels die gewünschte Menge an Wasser in der gewünschten Temperatur eingestellt. Die Temperatur des gemischten warmen Wassers bestimmt sich durch die Drehbewegung des Hebels und beruht auf Erfahrungswerten des Benutzers, da die Temperatur in erster Linie abhängig ist von der Temperatur des zur Verfügung stehenden heißen Wassers. Grundsätzlich besteht deshalb die Gefahr, daß sich die Bedienperson verbrüht.

In der DE 33 28 782 C3 ist zur Vermeidung von Verbrühungen eine Vorrichtung zur Messung und Anzeige der Temperatur des den Auslauf einer Sanitärarmatur durchströmenden Wassers offenbart. Die Armatur ist mit einer Sichtanzeige versehen, die bei Überschreiten einer der Verbrühgrenze entsprechenden Wassertemperatur ein auffälliges optisches Signal abgibt. Hierzu wird das von einem Temperatursensor abgegebene Signal der Ist-Wassertemperatur mit der Solltemperatur elektronisch verglichen. Eine ähnliche Einrichtung ist in der DE 35 13 549 C2 beschrieben.

Je nach Dauer der Unterbrechung zwischen einzelnen Entnahmevorgängen an einer Zapfstelle steht an der Zapfstelle nach Öffnen der Armatur nicht sofort warmes Wasser in der gewünschten Temperatur zur Verfügung. Abhängig von der Dauer der Unterbrechung und der Entfernung der Zapfstelle zum Warmwasserspeicher vergeht eine gewisse Zeitspanne, bis auch das in der Heißwasserleitung zwischenzeitlich abgekühlte Wasser durch heißes Wasser ausgetauscht ist. Es fließt also zunächst kaltes oder lauwarmes Wasser, das plötzlich heiß werden kann. Nachteilig an den bekannten Systemen ist also, daß zwar die Ist-Temperatur ermittelt wird und auch eine optische Warnung erfolgt, wenn die Verbrühgrenze erreicht ist, das Warnsignal aber eben kurz vor dem Zeitpunkt erfolgt, zu dem die Bedienperson selbst merkt, daß das entnommene Wasser zu heiß wird. Um der Gefahr von Verbrühungen zu entgehen, muß die Bedienperson entweder laufend die Anzeigevorrichtung im Auge behalten oder die Solltemperatur so niedrig eingestellt werden, daß die Warnung rechtzeitig erfolgt. Aber auch hier ist die optische Warnung immer gekoppelt mit dem persönlichen Temperatur-Empfinden des Benutzers, so daß sie im Grunde genommen nicht notwendig ist. Außerdem muß vor jeder Wasserentnahme entweder die gewünschte Solltemperatur eingestellt werden, was recht aufwendig ist, oder ein Sollwert fest eingestellt sein. Die individuelle Einstellung des Sollwertes für jeden Entnahmevorgang ist natürlich mühsam und zeitaufwendig, so daß ein solches System beim Verbraucher nur wenig Akzeptanz findet.

Aus der EP-A-0 387 396 ist eine elektrisch gesteuerte Mischeinrichtung bekannt, mit der über zwei Motoren der Wasserdurchfluss und das Mischverhältnis von kaltem und warmen Wasser eingestellt werden kann.

Aus der DE-A-34 26 890 ist eine mit einem Anzeigeelement versehene Mischvorrichtung bekannt. Die Ist-Temperatur des gemischten Wassers wird vom Anzeigeelement angezeigt. Über Tasten kann der Benutzer eine Temperaturänderung einleiten. Je nachdem welche Taste gedrückt wird, wird das Verhältnis von warmen zu kaltem Wasser verändert und die Temperatur erhöht oder reduziert. Eine Solltemperatur kann hingegen nicht eingestellt werden.

In aller Regel steht an der Zapfstelle nicht sofort nach Öffnen der Armatur warmes Wasser in der gewünschten Temperatur zur Verfügung. Abhängig von der Dauer der Unterbrechnung und der Entfernung der Zapfstellung zum Warmwasserspeicher vergeht eine gewisse Zeitspanne, bis auch das in der Heißwasserleitung zwischenzeitlich abgekühlte Wasser durch heißes Wasser ausgetauscht ist. Es fließt also zunächst kaltes oder lauwarmes Wasser, das plötzlich heiß werden kann. Bei dem System nach der DE-A 34 26 890 ist keine Einrichtung vorgesehen, die verhindern könnte, dass das entnommene Wasser die Verbrühgrenze erreicht oder diese gar überschreitet. Die Bedienperson muss entweder selbst merken, dass das entnommene Wasser zu heiß wird, das heißt sie hat sich möglicherweise bereits verbrüht, oder an der Anzeige erkennen, dass das Wasser eine Temperatur erreicht hat, die zu heiß ist, sie also die Hände nicht in den Wasserstrahl hinein hält. Wie bei herkömmlichen Wasserhähnen auch, muss die Temperatur des Wassers mit dieser Mischeinrichtung durch Erfühlen eingestellt werden, indem die Tasten solang oder so oft betätigt werden, bis eine angenehme Temperatur vorliegt. Die Temperatur kann dann am Anzeigeelement abgelesen werden.

Von dieser Problemstellung ausgehend soll eine Mischeinrichtung so verbessert werden, daß auf einfache Art und Weise Wasser in der jeweils individuell gewünschten Temperatur an der Zapfstelle entnommen werden kann und Verbrühungen bei richtiger Einstellung der Solltemperatur ausgeschlossen sind, die strömungsgünstig ausgebildet und kostengünstig herstellbar ist.

Die Problemlösung erfolgt durch eine Mischeinrichtung mit einer Mischkammer, in die eine Heißwasserleitung und eine Kaltwasserleitung zueinander in einem spitzen Winkel münden und einem in der Mischkammer um seine Hochachse schwenkbar angeordneten, mit einem Antrieb versehenen Mischer, wobei die Mischkammer zumindest im Bereich zwischen der Heißwasserleitung und der Kaltwasserleitung eine kreisabschnittförmige Innenwandung aufweist, der Mischer einen im wesentlichen kreissektorförmigen Querschnitt aufweist und seine radiale Wandung der Innenwandung angepasst ist, und durch die Schwenkbewegung des Mischers jede der Leitungen vollständig abgedeckt und geöffnet werden kann, wobei zwischen den Wandungen Spiel vorhanden ist und die die kreisbogenförmige Wandung des Mischers in Strömungsrichtung des Wassers begrenzenden Wandungen in Strömungsrichtung konkav ausgebildet sind.

Für eine besonders strömungsgünstige Ausbildung des Mischers sind die die kreisbogenförmige Wandung in Strömungsrichtung des Wassers begrenzenden Wandungen in Strömungsrichtung konkav ausgebildet. Verwirbelungen und damit Verluste am Eintritt in die Mischkammer werden hierdurch wirkungsvoll vermieden. Als Antrieb dient vorzugsweise ein elektrischer Stellmotor, der seine Signale von der Temperaturmeßeinrichtung erhält.

Die Mischeinrichtung kann insbesondere in einem Wasserentnahmesystem mit einem Heißwasserzulauf und einem Kaltwasserzulauf, einer Mischeinrichtung zum Mischen von Heißwasser und Kaltwasser in einem einstellbaren Verhältnis, einer Zapfeinrichtung zum Entnehmen des Wassers, die mit einer Temperaturmeßeinrichtung in Verbindung steht und in die ein Anzeigeelement integriert ist, das eine einstellbare Solltemperatur anzeigt, wobei in der Temperaturmeßeinrichtung die Isttemperatur des gewünschten Wassers mit der eingestellten Solltemperatur verglichen wird, entsprechend der Abweichung der Ist-Temperatur von der Soll-Temperatur das Verhältnis von heißem und kaltem Wasser geregelt wird, verwendet werden.

In diesem System ist gegenüber herkömmlichen Systemen die Mischeinrichtung von der Zapfeinrichtung getrennt. Das Mischen des Warmwassers muß folglich nicht zwingend in der Armatur erfolgen, sondern kann an irgendeiner Stelle vor der Entnahmestelle vorgenommen werden. Die Mischeinrichtung ist vorzugsweise elektromotorisch angetrieben und erhält ihre Steuersignale von der Temperaturmeßeinrichtung.

Insbesondere vorteilhaft ist es, wenn die Solltemperatur durch Schwenken eines Hebels der Zapfeinrichtung individuell einstellbar ist. Die Zapfeinrichtung kann dann das Aussehen einer herkömmlichen Einhebelarmatur haben. Durch Drehen des Hebels erfolgt über beispielsweise ein Potentiometer, das in der Armatur integriert ist, die Einstellung der Solltemperatur. Die Bedienweise entspricht folglich der eines herkömmlichen Wasserentnahmesystems. Der einmal eingestellte Wert wird gehalten, so daß Verbrühungen ausgeschlossen werden.

Insbesondere vorteilhaft ist es, wenn die eingestellte Solltemperatur auf einem in der Zapfeinrichtung integrierten Display angezeigt wird. Damit hat die Bedienperson sofort eine Rückkopplung darüber, ob die gewünschte Wassertemperatur auch ausreichend ist, und nicht zu kaltes Wasser entnommen wird. Eine Be grenzung der Maximaltemperatur kann über die Temperaturmeßeinrichtung vorgegeben werden, die dafür Sorge trägt, daß von der Mischeinrichtung eine bestimmte Wassertemperatur nicht oder nur nach Quittierung eines Signales oder dergleichen überschritten werden kann.

Mit Hilfe einer Zeichnung soll die Erfindung nachfolgend näher erläutert werden. Es zeigt:
- Figur 1 -: die Schnittdarstellung durch eine Armatur und ihre Einbindung in das System in schematischer Darstellung;

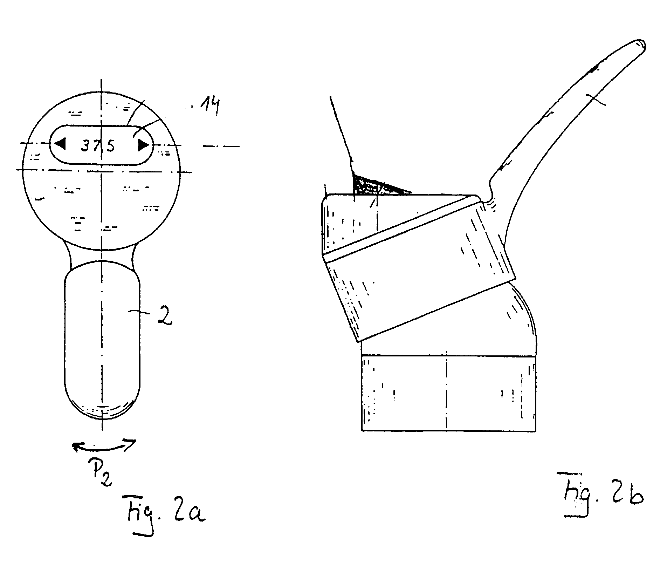

- Figur 2a -: die Draufsicht auf eine Armatur;
- Figur 2b -: die Seitenansicht der Armatur gemäß Figur 2a;
- Figur 3 -: die schematische Darstellung eines Ausführungsbeispieles der Mischeinrichtung im Schnitt;
- Figur 4 -: ein weiteres Ausführungsbeispiel einer Mischeinrichtung in einer zu Figur 3 analogen Darstellung;

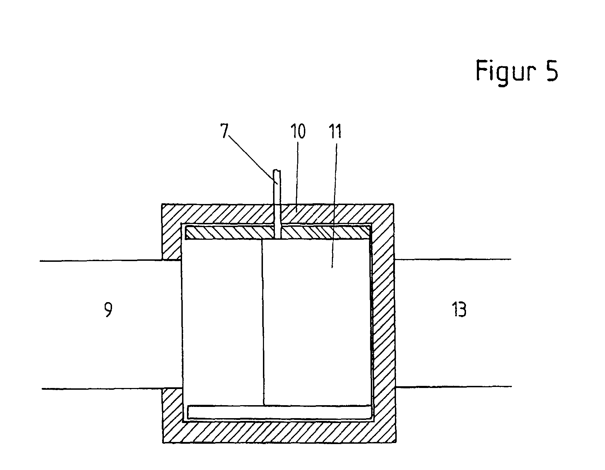

- Figur 5 -: den Schnitt gemäß der Linie V-V nach Figur 4.

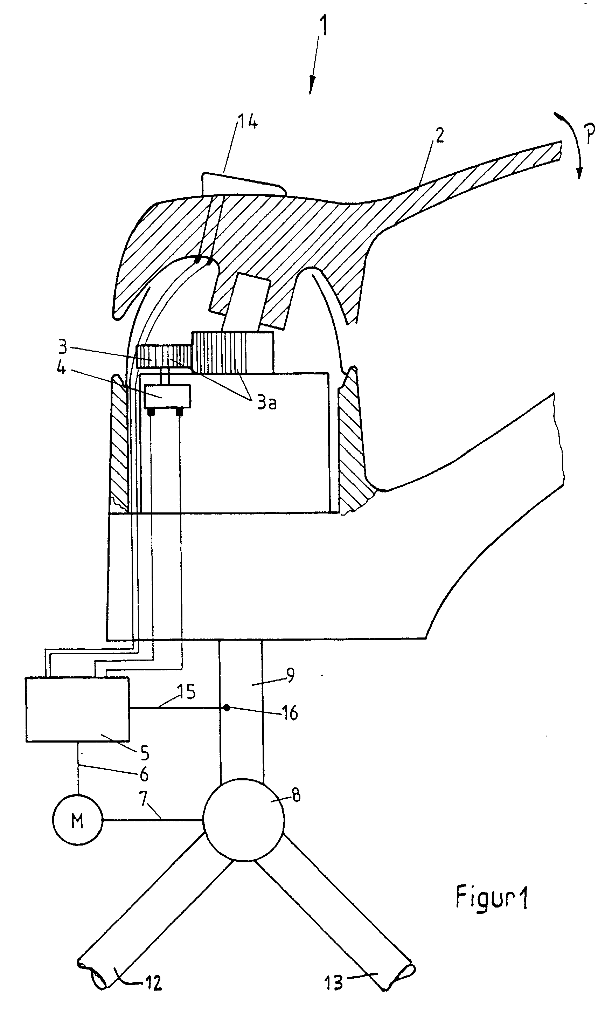

Aus Figur 1 wird das Wasserentnahmesystem deutlich. Die Armatur 1 ist die Zapfeinrichtung, die in herkömmlicher Weise an einem Waschbecken oder dergleichen vorgesehen ist. Der Hebel 1 kann in bekannter Weise nach oben und unten (Sichtpfeil P₁) sowie nach rechts und links (Sichtpfeil P₂) bewegt werden. Die Bewegung gemäß Sichtpfeil P₁ regelt die Menge des entnommenen Wassers und über die Bewegung gemäß Sichtpfeil P₂ wird die Temperatur des Wassers eingestellt. Der Hebel 2 ist über ein Zahnradgetriebe 3a mit einem Sollwertgeber 3 verbunden, der ein Drehpotentiometer 4 aufweist. Eine Bewegung in Richtung P₂ des Hebels 1 bewirkt eine Veränderung des Widerstandes des Drehpotentiometers 4. Das Drehpotentiometer 4 ist verbunden mit einer Temperaturmeßeinrichtung und Auswerteeinheit 5 sowie mit einer Anzeigeeinrichtung 14. Die Anzeigeeinrichtung 14 zeigt den Sollwert der gewünschten Wassertemperatur an, der sich bei einer Bewegung des Hebels 2 im Uhrzeigersinn erhöht und im Gegenuhrzeigersinn erniedrigt. Grundsätzlich ist als Sollwertgeber 3 ein Potentiometer jedweder Bauart einsetzbar. Der mechanische Antrieb wird entsprechend der jeweiligen Bauart bestimmt. Die Temperaturmeßeinrichtung und Auswerteeinheit 5 steht wie durch 6 angedeutet mit einem Stellmotor M in Wirkverbindung, der über eine Welle 7 den Mischer 11 in der Mischvorrichtung 8 betätigt. Von der Mischvorrichtung 8 führt eine Wasserleitung 9 an die Armatur 1, wie in Figur 1 durch die gestrichelte Linie angedeutet.

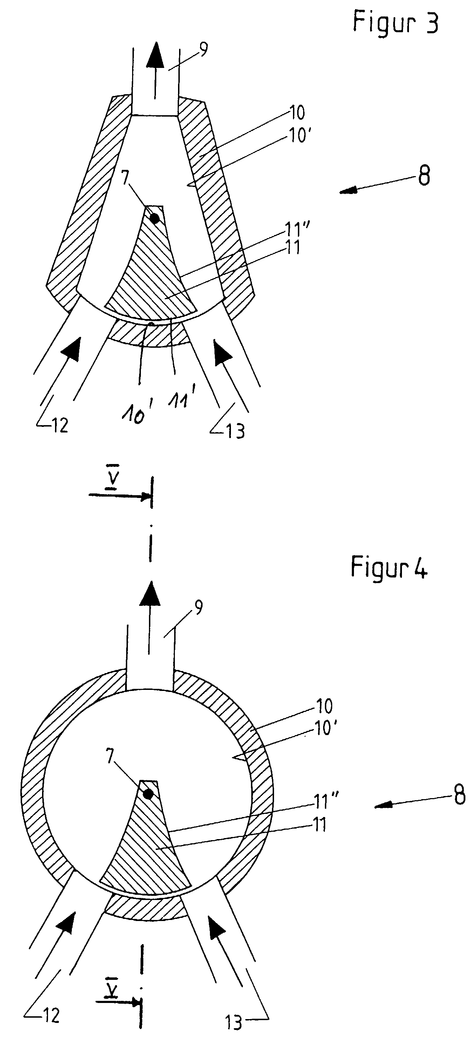

Der prinzipielle Aufbau der Mischeinrichtung 8 ist den Figuren 3 und 4 entnehmbar. Die Mischkammer 10 der Mischeinrichtung 8 ist mit einem Heißwasseranschluß 12 und einem Kaltwasseranschluß 13 versehen und über die Leitung 9, die den Anschlüssen 12, 13 diametral gegenüber angeordnet ist, mit der Armatur 1 verbunden. Die Heißwasserleitung 12 und Kaltwasserleitung 13 münden vorzugsweise in einem spitzen Winkel in die Mischkammer 10. Zumindest der Bereich zwischen ihnen ist im Querschnitt kreisabschnittförmig ausgebildet (Figur 3). Die Mischkammer 10 kann im Querschnitt aber auch kreisförmig ausgebildet sein (Figur 4). Im Inneren der Mischkammer 10 ist der Mischer 11 schwenkbar angeordnet. Die der Innenwandung 10' der Mischkammer 10 zugeordnete Wandung 11' des Mischers 11 ist so kreisbogenförmig ausgestaltet, daß sie der Wandung 10' angepaßt ist. Zwischen der Wandung 11' und der Innenwandung 10' ist Spiel vorhanden. Die Wandungen 11'' sind in Strömungsrichtung des Wassers, die in den Figuren 3 und 4 durch Pfeile angedeutet ist, konkav gewölbt, um beim Eintritt des Wassers in die Mischkammer 10 nur einen geringen Strömungswiderstand zu bieten. Über eine Welle 7 ist der Mischer 11 mit dem Stellmotor M verbunden. Die Mischeinrichtung 8 kann unmittelbar an der Armatur 1 vorgesehen sein oder sich irgendwo zwischen der Zapfstelle und dem Warmwasserspeicher befinden. Vorteilhaft wird es sicherlich sein, die Mischeinrichtung 8 unterhalb des mit der Armatur 1 versehenen, hier nicht näher dargestellten Waschtisch oder dergleichen anzubringen.

Die Funktionsweise des Systems ist folgende:

Die Armatur 1 wird von dem Bediener in herkömmlicher Weise betätigt. Über die Schwenkbewegung des Hebels 2 ändert sich der Widerstand des Drehpotentiometers 4 und auf der Sollwertanzeige 14 wird ein der Schwenkbewegung P₂ anloger Sollwert angezeigt. Dieser Sollwert wird in der Temperaturmeßeinrichtung und Auswerteeinheit 5 mit der Ist-Temperatur des Wassers in der Zulaufleitung 9 verglichen. Hierzu ist in der Zulaufleitung 9 ein Temperaturmeßfühler 16 integriert, der über eine Leitung 15 mit der Temperaturmeßeinrichtung und Auswerteeinheit 5 verbunden ist. Liegt die Ist-Temperatur unter der Solltemperatur wird der Stellmotor M so angesteuert, daß der Mischer 11 so geschwenkt wird, daß die Kaltwasserleitung 13 weiter überdeckt und folglich die Heißwasserleitung 12 mehr geöffnet wird. Steigt die Ist-Temperatur des Wassers in der Zulaufleitung 9 über den Sollwert an, schwenkt der Mischer 11 zurück und überdeckt die Heißwasserleitung 12 umso mehr er die Kaltwasserleitung 13 öffnet.

Zwischen den Wandungen 10' und 11' ist ein geringes Spiel vorhanden. Dadurch arbeitet der Mischer 8 im wesentlichen verschleißfrei. Da die Temperatur des Wassers geregelt wird, ist es nicht zwingend notwendig, daß der Zulauf der Leitungen 12, 13 völlig verschließbar sein muß. Leckverluste sind so gering, daß sie bei der Forderung nach ausschließlich Kaltwasser bzw. Heißwasser vernachlässigt werden können.

### Bezugszeichenliste

- 1: Armatur
- 2: Hebel
- 3: Sollwertgeber
- 3a: Zahnradgetriebe
- 4: Potentiometer
- 5: Temperaturmeßeinrichtung und Auswerteeinheit
- 6: Leitung
- 7: Antriebswelle
- 8: Mischeinrichtung
- 9: Zulaufleitung
- 10: Mischkammer
- 10': Innenwandung
- 11: Mischer
- 11': Wandung
- 11'': Wandung
- 12: Heißwasserleitung
- 13: Kaltwasserleitung
- 14: Sollwertanzeige
- 15: Verbindungsleitung
- 16: Temperaturfühler
- M: Stellmotor
- P₁: Sichtpfeil
- P₂: Sichtpfeil

## Patentansprüche

1. Mischeinrichtung mit einer Mischkammer (10), in die eine Heißwasserleitung (12) und eine Kaltwasserleitung (13) zueinander in einem spitzen Winkel münden und einem in der Mischkammer (10) um seine Hochachse schwenkbar angeordneten, mit einem Antrieb versehenen Mischer (11), wobei die Mischkammer (10) zumindest im Bereich zwischen der Heißwasserleitung (12) und der Kaltwasserleitung (13) eine kreisabschnittförmige Innenwandung (10') aufweist, der Mischer (11) einen im wesentlichen kreissektorförmigen Querschnitt aufweist und seine radiale Wandung (11') der Innenwandung (10') angepaßt ist und durch die Schwenkbewegung des Mischers (11) jede der Leitungen (12, 13) vollständig abgedeckt und geöffnet werden kann, wobei zwischen den Wandungen (10', 11') Spiel vorhanden ist und die die kreisbogenförmige Wandung (11') des Mischers (11) in Strömungsrichtung des Wassers begrenzenden Wandungen (11") in Strömungsrichtung konkav ausgebildet sind.

2. Mischeinrichtung nach Anspruch 1, **dadurch gekennzeichnet,** daß der Mischer (11) von einem elektrischen Stellmotor (M) antreibbar ist.

3. Mischeinrichtung nach Anspruch 1 oder 2, gekennzeichnet durch die Verwendung in einem Wasserentnahmesystem mit einem Heißwasserzulauf (12) und einem Kaltwasserzulauf (13), zum Mischen von Heißwasser und Kaltwasser in einem einstellbaren Verhältnis, einer Zapfeinrichtung (1) zum Entnehmen des Wassers, die mit einer Temperaturmeßeinrichtung (5) in Verbindung steht und in die ein Temperatur-Anzeigeelement (14) integriert ist, wobei das Anzeigeelement (14) die über die Zapfeinrichtung (1) einstellbare Solltemperatur anzeigt, in der Temperaturmeßeinrichtung (5) die Ist-Temperatur des gemischten Wassers mit der eingestellten Solltemperatur verglichen wird und entsprechend der Abweichung der Ist-Temperatur von der Soll-Temperatur das Verhältnis von heißem und kaltem Wasser von der Mischeinrichtung (8) geregelt wird.

4. Mischeinrichtung nach Anspruch 3, **dadurch gekennzeichnet,** daß die Solltemperatur durch Schwenken eines Hebels (2) der Zapfeinrichtung (1) individuell einstellbar ist.

5. Mischeinrichtung nach Anspruch 3, **dadurch gekennzeichnet,** daß die Mischeinrichtung (8) elektromotorisch angetrieben ist und Steuersignale von einer Temperaturmeßeinrichtung mit Auswerteeinheit erhält.

## Claims

1. Mixing device having a mixing chamber (10), into which a hot water pipe (12) and a cold water pipe (13) open out at an acute angle relative to one another, and having a mixer (11) provided with a drive and disposed so as to be capable of swivelling about its vertical axis in the mixing chamber (10), wherein the mixing chamber (10) at least in the region between the hot water pipe (12) and the cold water pipe (13) comprises an inner wall (10') in the shape of a segment of a circle, the mixer (11) has a substantially sector-shaped cross section and its radial wall (11') is adapted to the inner wall (10'), and by means of the swivelling movement of the mixer (11) each of the pipes (12, 13) may be completely covered and opened, wherein there is clearance between the walls (10', 11') and the walls (11"), which delimit the arc-shaped wall (11') of the mixer (11) in the direction of flow of the water, are designed so as to be concave in flow direction.

2. Mixing device according to claim 1, **characterized in that** the mixer (11) is drivable by an electric servomotor (M).

3. Mixing device according to claim 1 or 2, characterized by the use in a water removal system having a hot water supply (12) and a cold water supply (13), [sic] for mixing hot water and cold water in an adjustable ratio, a dispensing device (1) for removing the water, which is connected to a temperature measuring device (5) and has an integrated temperature display element (14), wherein the display element (14) displays the setpoint temperature adjustable via the dispensing device (1), in the temperature measuring device (5) the actual temperature of the mixed water is compared with the adjusted setpoint temperature and in accordance with deviation of the actual temperature from the setpoint temperature the ratio of hot and cold water is adjusted by the mixing device (8).

4. Mixing device according to claim 3, **characterized in that** the setpoint temperature is individually adjustable by swivelling a lever (2) of the dispensing device (1).

5. Mixing device according to claim 3, **characterized in that** the mixing device (8) is electric motor-driven and receives control signals from a temperature measuring device plus evaluation unit.

## Revendications

1. Dispositif mélangeur comprenant une chambre de mélange (10) dans laquelle une conduite d'eau chaude (12) et une conduite d'eau froide (13) débouchent l'une vers l'autre sous un angle aigu, et un mélangeur (11) muni d'un moyen d'entraînement, et monté orientable autour de son axe vertical dans la chambre de mélange (10), la chambre de mélange (10) présentant au moins dans la zone entre la conduite d'eau chaude (12) et la conduite d'eau froide (13) une paroi intérieure (10') en forme de segment de cercle, tandis que le mélangeur (11) présente une section transversale sensiblement en forme de secteur circulaire et sa paroi radiale (11') est adaptée à la paroi intérieure (10') et par le mouvement d'orientation du mélangeur (11) chacune des conduites (12, 13) peut être complètement recouverte et ouverte, du jeu étant prévu entre les parois (10', 11'), tandis que les parois (11") limitant la paroi en forme d'arc de cercle (11') du mélangeur (11) dans la direction d'écoulement de l'eau sont réalisées concaves dans la direction d'écoulement.

2. Dispositif mélangeur selon la revendication 1, caractérisé en ce que le mélangeur (11) peut être entraîné par un moteur de réglage électrique (M).

3. Dispositif mélangeur selon la revendication 1 ou 2, caractérisé par l'utilisation dans un système de prélèvement d'eau comportant une arrivée d'eau chaude (12) et une arrivée d'eau froide (13) pour mélanger de l'eau chaude et de l'eau froide dans un rapport réglable, un agencement distributeur (1) pour le soutirage de l'eau, qui est en liaison avec un dispositif de mesure de température (5) et dans lequel est intégré un élément d'affichage de température (14) qui indique la consigne de température réglable au moyen de l'agencement distributeur (1), la température mesurée de l'eau mélangée étant comparée avec la consigne de température réglée dans le dispositif de mesure de température (5) et en fonction de l'écart de la température mesurée par rapport à la consigne de température, le rapport d'eau chaude et froide est régulé par le dispositif mélangeur (8).

4. Dispositif mélangeur selon la revendication 3, caractérisé en ce que la consigne de température est réglable individuellement en orientant un levier (2) de l'agencement distributeur (1).

5. Dispositif mélangeur selon la revendication 3, caractérisé en ce que le dispositif mélangeur (8) est entraîné par moteur électrique et reçoit des signaux de commande d'un dispositif de mesure de température avec unité de traitement.
